# EUROPEAN PATENT SPECIFICATION

(11) **EP 4 289 318 B1**
(45) Date of publication and mention of the grant of the patent: **29.04.2026**
(21) Application number: 21924149.4
(22) Date of filing: 13.08.2021
(51) Int. Cl.: A47J 37/06

(54) **AIR FRYER WITH TRANSPARENT WINDOW**
LUFTFRITEUSE MIT TRANSPARENTEM FENSTER
FRITEUSE À AIR CHAUD À FENÊTRE TRANSPARENTE

(30) Priority: 03.02.2021 CN 202120304361 U; 03.02.2021 CN 202120304344 U
(43) Date of publication of application: 13.12.2023
(73) Proprietor: Ningbo Careline Electric Appliance Co., Ltd., Ningbo, Zhejiang 315327 (CN)
(72) Inventor: ZHANG, Yichi, Zhejiang 315327 (CN)
(74) Representative: Locas, Davide
(86) International application number: PCT/CN2021/112479
(87) International publication number: WO 2022/166149

(56) References cited:
- CN-A- 103 142 151
- CN-A- 111 802 923
- CN-U- 206 525 958
- CN-U- 208 864 120
- CN-U- 209 610 896
- CN-U- 209 610 896
- CN-U- 209 996 067
- CN-U- 209 996 067
- CN-U- 210 138 081
- CN-U- 210 185 380
- CN-U- 210 185 380
- CN-U- 212 165 641
- CN-U- 212 415 517
- CN-U- 212 415 517
- US-A1- 2019 142 217

## Description

### Technical Field

The present disclosure relates to the field of air fryers, in particular to an air fryer with a transparent window.

### Background Art

An air fryer is an electrical appliance that uses high-temperature air to fry and roast food. In order to observe the cooking state of the food, the existing air fryers are often equipped with a window structure. Some of the windows are set on the drawer-type frying basket, and some are set on the top of the body. The sealing of the window structure provided on the drawer-type frying basket is a problem, in which the window is easy not to be installed firmly, and therefore, the sealing is poor, which will cause the heat in the frying basket to leak.

At present, illumination lights are generally installed inside the air fryer with a window. The illumination light of most products is installed in places where the ambient temperature is relatively high, which will lead to a short lifespan of the illumination lights.

For example, CN209610896U relates to a visible door structure for an air fryer. The method is characterized by comprising the following steps; door assembly, the door body assembly comprises a first shell and a second shell which are connected in a matched mode. Wherein a first installation opening is formed in the first shell, a transparent plate is installed in the first installation opening, a second installation opening is formed in the second shell, a high-temperature-resistant transparent layer is installed in the second installation opening, and the first shell, the second shell, the transparent plate and the high-temperature-resistant transparent layer are assembled to form an interlayer inner cavity.

### Summary

The present disclosure provides an air fryer with a transparent window, which can realize the positioning and installation of the window member, at the same time, effectively prevent the heat in the frying basket from overflowing, reduce the ambient temperature at the installation position of the illumination light, and prolong the lifespan of the illumination light.

In order to achieve the above object, the present disclosure provides the following technical solutions. An air fryer with a transparent window includes a body, wherein the side of the body is provided with an opening communicating with the cooking chamber inside the air fryer. The opening can be inserted by a drawer-type frying basket, and the drawer-type frying basket includes a frying basket and a door panel portion connected to one side of the frying basket, wherein the door panel portion is configured to seal the opening. The door panel portion and the side wall of the frying basket are correspondingly provided with hollow portions, wherein the hollow portion of the door panel portion is provided with a window member. A window rear cover is installed between the inner side of the door panel portion and the frying basket, wherein the window rear cover has a hollow structure corresponding to the hollow portions on the door panel portion and the frying basket. One side of the window rear cover abuts against the frying basket, and the other side abuts against the window member to press and fix the window member on the door panel portion. An edge of the hollow portion of the frying basket is provided with a flanging portion and a side of the window rear cover facing the frying basket is provided with a concave step.

Preferably, the door panel portion includes a front door panel and a rear door panel, wherein the hollow portions of the front door panel and the rear door panel are respectively equipped with a window front cover made of a light-transmitting material and the window member.

Preferably, one side of the window rear cover facing the window member is provided with a ring of retaining rib that is attached to the window member.

Preferably, several buffer pads are provided between the window member and the window rear cover on the periphery of the retaining rib.

Preferably, the buffer pads include a buffer sheet attached to the window member and a mounting column arranged on one side of the buffer sheet, wherein several slots are provided on the circumferential side wall of the mounting column, and a positioning hole are provided at the end portion of the mounting column. A socket for inserting the mounting column is provided on the side wall of the window rear cover at a position corresponding to the buffer pad, and the inner wall of the socket is provided with convex ribs embedded in the corresponding slot, and the bottom of the socket is provided with a positioning column inserted into the positioning hole.

Preferably, the rear door panel is provided with a positioning groove corresponding to the window member, wherein the edge of the window member is at least partially located in the positioning groove.

Preferably, the frying basket is connected with the rear door panel through several fasteners, wherein the fasteners are distributed outside the hollow portion.

Preferably, a frying panel supporting step is provided on the inner wall of the frying basket, wherein the hollow portion of the frying basket is located on the upper side of the frying panel supporting step.

Preferably, the side wall of the rear door panel facing the frying basket is provided with a frying basket positioning groove, wherein the outwardly extending edge of the upper end of the frying basket extends into the frying basket positioning groove.

Preferably, a heat dissipation channel is formed between the outside of the cooking chamber and the body of the air fryer, wherein an illumination light is arranged in the heat dissipation channel, and a light-transmitting member is provided at a position corresponding to the illumination light on the cooking chamber. The light emitted by the illumination light is irradiated into the cooking chamber through the light-transmitting member.

Preferably, the cooking chamber is formed by the lower machine core and the air duct plate on the upper side of the lower machine core, wherein a heat dissipation channel is formed between the air duct plate and the upper machine core on its upper side, and the illumination light is located inside the heat dissipation channel.

Preferably, an opening is provided on the air duct plate at a position corresponding to the illumination light, wherein a light-transmitting member is installed at the opening.

Preferably, the light-transmitting member is light-transmitting glass.

Preferably, the opening is arranged inside an inner recess outside the air duct plate, wherein the size of the inner recess matches the light-transmitting member.

Preferably, the illumination light is installed on the upper machine core.

Preferably, the top and bottom of the body are both provided with cold air inlets, and the sides of the body are provided with cold air outlets, wherein the cold air inlets and cold air outlets are all communicated to the heat dissipation channel.

Preferably, a cooling fan communicating with the heat dissipation channel is installed on the upper side of the cooking chamber.

Compared with prior art, the beneficial effect of the present disclosure is as follow. The drawer-type frying basket has a window structure, and a window rear cover is provided, which can realize the positioning and installation of the window member, and at the same time, effectively prevent the heat in the frying basket from overflowing. Multiple buffer rubber pads are provided between the window rear cover and the window member, wherein the height of buffer rubber pads are slightly higher than that of the retaining rib, so as to prevent the retaining rib from crushing the window member. The illumination light is arranged in the heat dissipation channel outside the cooking chamber, and the light can pass through the light-transmitting member on the cooking chamber and enter the cooking chamber to perform illumination. At the same time, the illumination light is continuously being cooled, thereby greatly extending the lifespan.

### Brief Description of Drawings

Fig. 1 is a front half-section structural schematic view of the present disclosure;
Fig. 2 is an enlarged structural view of at A in Fig. 1;
Fig. 3 is an explosive structural view of the drawer-type frying basket of the present disclosure;
Fig. 4 is a front half-section structural schematic view of the drawer-type frying basket of the present disclosure;
Fig. 5 is a three-dimensional half-section structural view of the drawer-type frying basket of the present disclosure;
Fig. 6 is a partial sectional structural view of the drawer-type frying basket of the present disclosure;
Fig. 7 is a three-dimensional structural view of the buffer pad of the present disclosure;
Fig. 8 is a three-dimensional structural view of the window rear cover of the present disclosure;
Fig. 9 is an enlarged structural view at B in Fig. 8; and
Fig. 10 is a schematic view of installation of the illumination light of the present disclosure.

### Reference numerals:

1. cooking chamber, 11. flanging portion, 12. lower machine core; 14. heat dissipation channel, 15. light-transmitting member; 16. illumination light; 17. upper machine core, 18. air duct plate; 19. cooling fan; 2. window rear cover; 21. concave step; 22. retaining rib; 23. socket; 24. convex rib; 25. positioning column; 3. window member; 4. rear door panel; 42. positioning groove; 43. frying basket positioning groove; 5. window front cover; 6. front door panel; 7. frying panel supporting step; 8. buffer pad; 81. buffer sheet; 82. mounting column; 83. positioning hole; 84. slot; 9. fastener; 10. frying basket.

### Detailed Description of Embodiments

The following will clearly and completely describe the technical solutions in the embodiments of the present disclosure with reference to the drawings in the embodiments of the present disclosure.

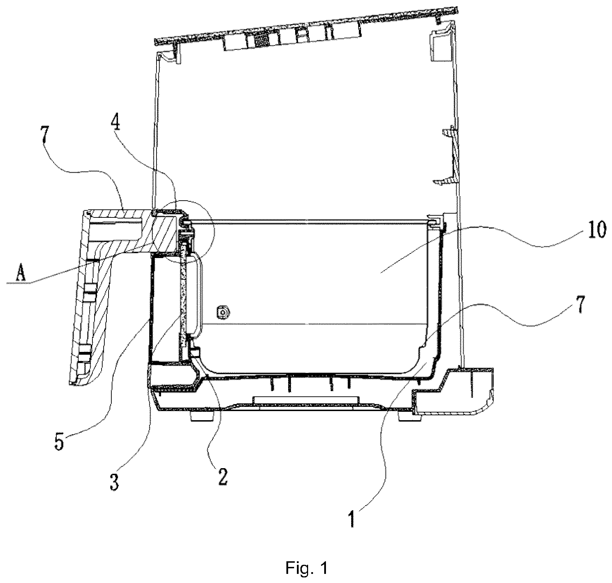

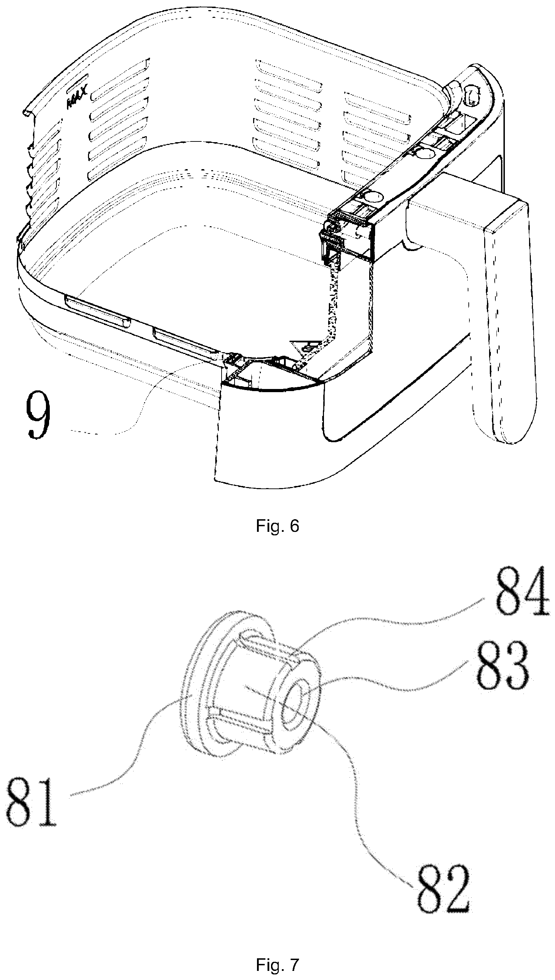

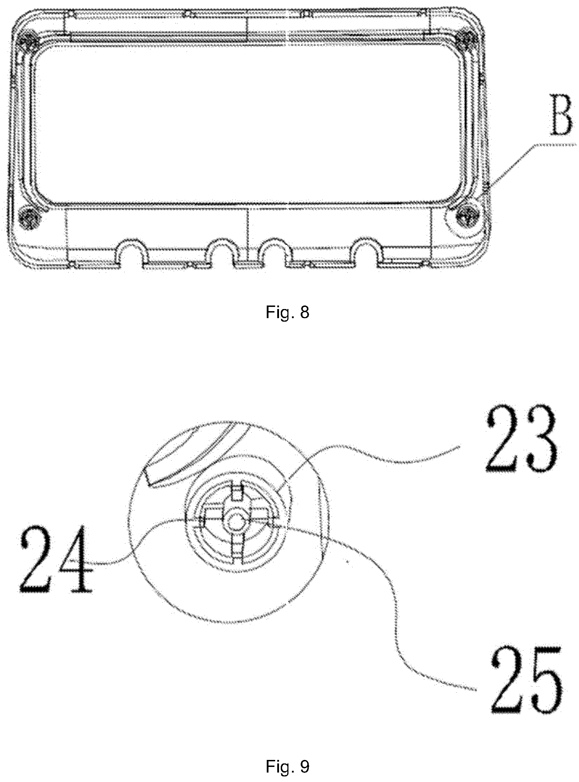

As shown in Figs. 1-9, the present disclosure provides the following technical solutions in order to achieve the above object. An air fryer with a transparent window includes a body, wherein the side of the body is provided with an opening that communicates with the cooking chamber 1 in the air fryer, the opening can be inserted by a drawer-type frying basket. The drawer-type frying basket includes a frying basket 10 and a door panel portion connected to one side of the frying basket 10, wherein the door panel portion is configured to seal the opening, and the door panel portion and the side wall of the frying basket 10 are correspondingly provided with hollow portion. The hollow portion of the door panel portion is provided therein with a window member 3, and the window rear cover 2 has a hollow structure corresponding to the hollow portions on the door panel portion and the frying basket 10, wherein one side of the window rear cover 2 abuts against the frying basket 10, and the other side abuts against the window member 3 to press and fix the window member 3 on the door panel portion.

The window member 3 is pressed by the window reat cover 2 to realize the positioning and installation of the window member 3, and at the same time, effectively prevent the heat in the frying basket from overflowing from the installation gap of the window member 3.

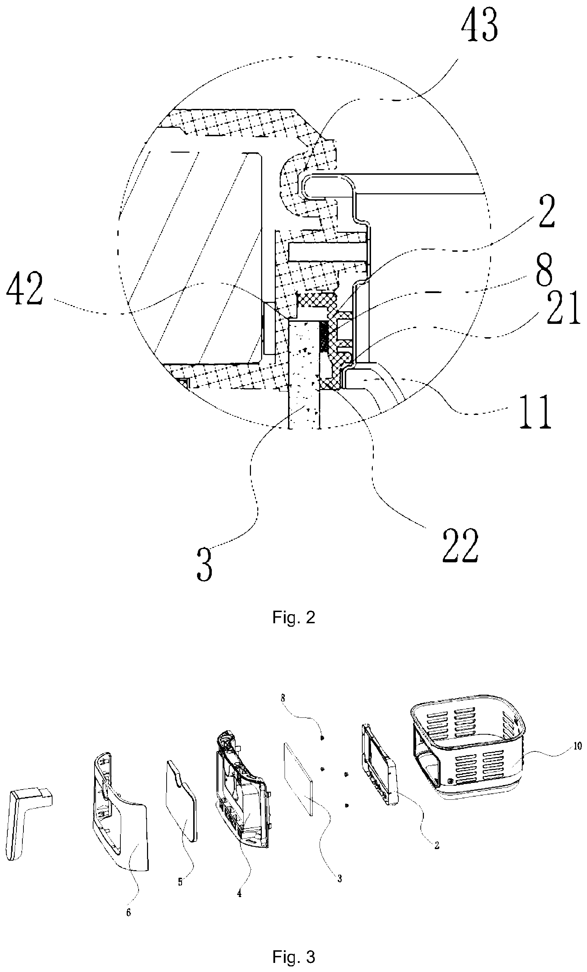

As shown in Fig. 3, the door panel portion includes a front door panel 6 and a rear door panel 4, wherein the hollow portions of the front door panel 6 and the rear door panel 4 are respectively equipped with a window front cover 5 made of a light-transmitting material and the window member 3. The front door panel 6 and the rear door panel 4 are arranged in a front-rear snap-fit manner, and the window front cover 5 between the front door panel 6 and the rear door panel 4 is configured as a protection for window member 3 at the rear, which can further prevent heat from spilling.

The front door panel 6 and the rear door panel 4 are assembled first while installing, and the window front cover 5 is installed and positioned at the same time, then the window member 3 is installed on the rear side of the rear door panel 4 and is compressed by the window rear cover 2. After that, the frying basket 10 is connected with the rear door panel 4, so as to clamp tightly the window rear cover 2, so that the installation and fixation of the window member 3 is accomplished.

At the same time, as shown in Fig. 2, the edge of the hollow portion of the frying basket 10 is provided with a flanging portion 11, and the side of the window rear cover 2 facing the frying basket 10 is provided with a concave step 21, wherein the flanging portion 11 has sufficient strength to prevent deformation of the hollow portion of the frying basket 10. The cooperation between the concave step 21 and the flanging portion 11 can reduce the heat from escaping from the gap.

The side of the window rear cover 2 facing the window member 3 is provided with a ring of retaining rib 22 attached tightly to the window member 3, and the retaining rib 22 can block heat and prevent heat from overflowing.

In order to prevent the window member 3 from being crushed by the window rear cover 2, several buffer pads 8 are arranged between the window member 3 and the window rear cover 2 on the periphery of the retaining rib 22, and the buffer pads 8 limit and support the window member 3, wherein the height of buffer pads 8 is slightly higher than that of the retaining rib 22, thus, the retaining rib 22 will not directly contact and put stress on the window member 3, so as to prevent the retaining rib from crushing the window member 3.

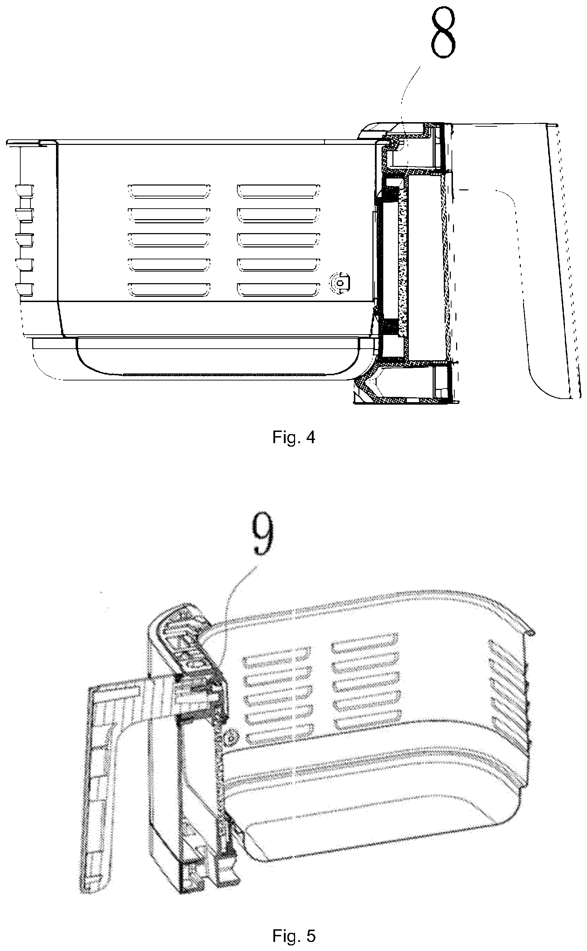

As a specific embodiment of the buffer pad 8, as shown in Fig. 4, Fig.7-Fig.9, the buffer pad 8 includes a buffer sheet 81 attached to the window member 3 and a mounting column 82 arranged on one side of the buffer sheet 81, wherein the mounting column 82 and the buffer sheet 81 are integrally formed and are all made of flexible materials. Several slots 84 are arranged on the circumferential side wall of the mounting column 82, and the end portion of the mounting column 82 has positioning hole 83. The side wall of the window rear cover 2 corresponding to the buffer pads 8 is provided with a socket 23 for inserting the mounting column 82, and the inner wall of the socket 23 is provided with convex ribs 24 embedded in corresponding slots 84, wherein the bottom of the socket 23 is provided with a positioning column 25 inserted into the positioning hole 83.

The insertion connection between the slot 84 and the convex rib 24 can prevent the buffer pad 8 from rotating, and the positioning hole 83 can perform central orientation for the buffer pad 8 when installing the buffer pad 8. Through this installation method, the end face of the buffer sheet 81 can be flatly attached to the window member 3, thereby effectively supporting the window member 3.

In order to further facilitate the installation of the window member 3, as shown in Fig. 2, the rear door panel 4 is provided with a positioning groove 42 corresponding to the window member 3, wherein the edge of the window member 3 is at least partly located inside the groove 42. The groove 42 can position the window member 3, which is convenient for installation and can also play a role in preventing heat from overflowing.

The frying basket 10 is connected with the rear door panel 4 through several fasteners 9, as shown in Fig. 5-Fig. 6, the fasteners 9 are located outside the hollow portion. The rear door panel 4 and the frying basket 10 are connected internally through multiple fasteners 9, and the fasteners 9 are relatively scattered, such that the connection is relatively firm and reliable. Moreover, the positions of the fasteners 9 between the rear door panel 4 and the frying basket 10 avoid the positions of the window member 3 and the window rear cover 2, thereby realizing that the window member and the window rear cover are clamped and fixed in the cavity therebetween, thus improving the firmness of the structure.

As shown in Fig. 3, the inner wall of the frying basket 10 is provided with a frying panel supporting step 7, wherein the hollow portion of the frying basket 10 is located on the upper side of the frying panel supporting step 7, and the frying panel supporting step 7 can prevent frying the panel. Food is placed on the frying panel, so that the food on the frying panel can be directly seen through the hollow portion, which is very convenient.

The side wall of the rear door panel 4 facing the frying basket 10 is provided with a frying basket positioning groove 43, wherein the outwardly extending edge of the upper end of the frying basket 10 extends into the frying basket positioning groove 43. When installing the frying basket 10, the edge can be first inserted into the frying basket positioning groove 43 for positioning, which is convenient for installation. Moreover, the edge embedded in the frying basket positioning groove 43 can also prevent the leakage of heat.

At the same time, when installing the handle, the fastener 9 configured for the handle installation can be arranged in the frying basket positioning groove 43, such that the handle is fixed from the inside, which saves space.

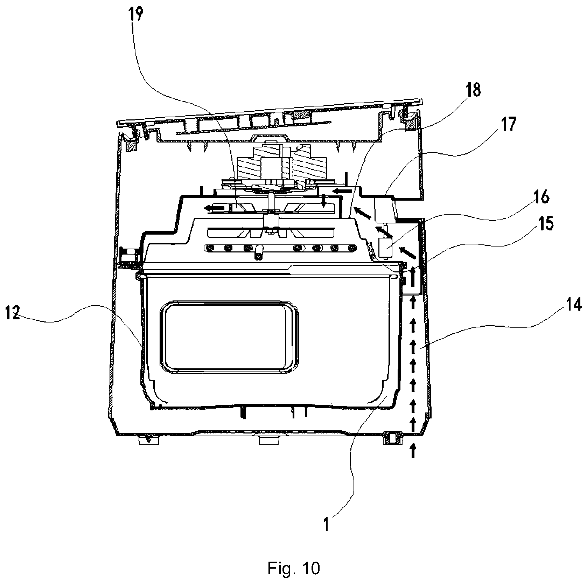

As another embodiment of the present disclosure, as shown in Fig. 10, a heat dissipation channel 14 is formed between the outside of the cooking chamber 1 and the body of the air fryer, wherein an illumination light 16 is arranged in the heat dissipation channel 14. The position corresponding to the illumination light 16 on the cooking chamber 1 is provided with a light-transmitting member 15, wherein the light emitted by the illumination light 16 is irradiated into the cooking chamber 1 through the light-transmitting member 15, so that the illumination light 16 is separated from the cooking chamber 1. The temperature change in the cooking chamber 1 will not affect the lifespan of the illumination light 16, and the heat generated by the illumination light 16 can be taken away by the cold air in the heat dissipation channel 14, thereby prolonging the lifespan of the illumination light 16 greatly.

As shown in Fig. 10, the cooking chamber 1 is formed by the lower machine core 12 and the air duct plate 18 on the upper side of the lower machine core 12, wherein the heat dissipation channel 14 is formed between the air duct plate 18 and the upper machine core 17 on its upper side. The illumination light 16 is located in the heat dissipation channel 14, the position corresponding to the illumination light 16 on the air duct plate 18 has an opening, wherein the light-transmitting member 15 is installed at the opening. In order to better illuminate the space in the cooking chamber 1, the lighting manner from top to bottom is generally preferred, and the heat dissipation channel 14 formed between the air duct plate 18 and the upper machine core 17 is more suitable. The illumination light 16 can be disassembled by disassembling the upper machine core 17 when disassembling.

Specifically, as shown in Fig. 10, the illumination light 16 can be installed on the upper machine core 17, and its power cord directly enters the upper machine core 17 to be electrically connected with the control element, wherein the operation of the illumination light 16 is controlled by the control element. The illumination light 16 itself is not in contact with the air duct plate 18, so there is no contact heat conduction.

At the same time, the position corresponding to the illumination light 16 is opened on the air duct plate 18, wherein the light-transmitting member 15 is installed at the opening. The air duct plate 18 is an independent part, and it is easier to form an opening on it, and the area of the light-transmitting member 15 can also be made larger to increase the lighting area. Specifically, the opening on the side wall of the air duct plate 18 is provided with a concave part. The light-transmitting member 15 is embedded in the concave part for positioning, and simultaneously, is connected to the air duct plate 18.

The light-transmitting member 15 herein is light-transmitting glass, which generally adopts heat-insulating glass. A sealing member is arranged between the light-transmitting member 15 and the air duct plate 18, to prevent the heat in the cooking chamber from leaking.

In order to improve the flow rate of the cold air in the heat dissipation channel 14 and simultaneously dissipate heat to the components in the cooking chamber and the upper machine core, the top and bottom of the body are provided with cold air inlets, and the sides of the body are provided with cold air outlets, wherein the cold air inlets and the cold air outlets are all in communication with the heat dissipation channel 14.

Simultaneously, the upper side of the cooking chamber 1 is installed with the cooling fan 19 that communicates with the heat dissipation channel 14, the cold air can be inhaled from cold air inlets at the top and bottom of body by cooling fan 19, then can be led to and discharged through the cold air outlets, thereby improving the flow rate of cold air in the heat dissipation channel 14. A cooling fan 19 also can be installed in the upper machine core 17, so that the cold air can be inhaled quickly from the top of the body conveniently.

While the present disclosure has been described above with reference to the embodiments, various modifications can be made thereto without departing from the scope of the present disclosure as long as the resulting embodiment is encompassed by the scope of the appended claims.

In particular, the various features in the embodiments disclosed in the present disclosure can be configured in combination with each other in any way, as long as the resulting embodiment is encompassed by the scope of the appended claims.

Therefore, the present disclosure is not limited to the specific embodiments disclosed herein, but includes all technical solutions falling within the scope of the claims.

## Claims

1. An air fryer with a transparent window, comprising a body, wherein a side of the body is provided with an opening communicating with a cooking chamber (1) inside the air fryer, and the opening is inserted by a drawer-type frying basket, the drawer-type frying basket comprises a frying basket (10) and a door panel portion connected to one side of the frying basket (10), and the door panel portion is configured to block the opening, wherein
the door panel portion and a side wall of the frying basket (10) are correspondingly provided with a hollow portion, and the hollow portion of the door panel portion is provided with a window member (3), and a window rear cover (2) is installed between an inner side of the door panel portion and the frying basket (10), wherein the window rear cover (2) has a hollow structure corresponding to the hollow portion of the door panel portion and the frying basket (10), and one side of the window rear cover (2) abuts against the frying basket (10), and the other side abuts against the window member (3) to press and fix the window member (3) on the door panel portion;
**characterized in that**,
an edge of the hollow portion of the frying basket (10) is provided with a flanging portion (11), and a side of the window rear cover (2) facing the frying basket (10) is provided with a concave step (21).

2. The air fryer with a transparent window according to claim 1, wherein the door panel portion comprises a front door panel (6) and a rear door panel (4), hollow portions of the front door panel (6) and the rear door panel (4) are respectively equipped with a window front cover (5) made of a light-transmitting material and the window member (3).

3. The air fryer with a transparent window according to claim 1, wherein a side of the window rear cover (2) facing the window member (3) is provided with a ring of retaining rib (22) attached to the window member (3).

4. The air fryer with a transparent window according to claim 3, wherein several buffer pads (8) are arranged between the window member (3) and the window rear cover (2) on a periphery of the retaining rib (22),
preferably, each of the buffer pads (8) comprises a buffer sheet (81) attached to the window member (3) and a mounting column (82) arranged at one side of the buffer sheet (81), wherein several slots (84) are arranged on a circumferential side wall of the mounting column (82), and a positioning hole (83) is arranged at an end portion of the mounting column (82), wherein a socket (23) for inserting the mounting column (82) is provided on a side wall of the window rear cover (2) at a position corresponding to the buffer pads (8), an inner wall of the socket (23) is provided with convex ribs (24) embedded in corresponding slots (84), and a bottom of the socket (23) is provided with a positioning column (25) inserted into the positioning hole (83).

5. The air fryer with a transparent window according to claim 2, wherein the rear door panel (4) is provided with a positioning groove (42) corresponding to the window member (3), wherein an edge of the window member (3) is at least partially located in the positioning groove (42).

6. The air fryer with a transparent window according to claim 2, wherein the frying basket (10) is connected with the rear door panel (4) through several fasteners (9), wherein the fasteners (9) are distributed outside of the hollow portion.

7. The air fryer with a transparent window according to claim 2, wherein an inner wall of the frying basket (10) is provided with a frying panel supporting step (7), and the hollow portion of the frying basket (10) is located on an upper side of the frying panel supporting step (7).

8. The air fryer with a transparent window according to claim 2, wherein a side wall of the rear door panel (4) facing the frying basket (10) is provided with a frying basket positioning groove (43), and an outwardly extending edge of an upper end of the frying basket (10) extends into the frying basket positioning groove (43).

9. The air fryer with a transparent window according to any one of claims 1-8, wherein a heat dissipation channel (14) is formed between an outside of the cooking chamber (1) and the body of the air fryer, and the heat dissipation channel (14) is provided therein with an illumination light (16), wherein a position corresponding to the illumination light (16) on the cooking chamber (1) is provided with a light-transmitting member (15), and light emitted by the illumination light (16) is irradiated into the cooking chamber (1) through the light-transmitting member (15).

10. The air fryer with a transparent window according to claim 9, wherein the cooking chamber (1) is formed by a lower machine core (12) and an air duct plate (18) on an upper side of the lower machine core (12), the heat dissipation channel (14) is formed between the air duct plate (18) and an upper machine core (17) on upper side thereof, and the illumination light (16) is located in the heat dissipation channel (14),
preferably, the air duct plate (18) has an opening at a position corresponding to the illumination light (16), and the light-transmitting member (15) is installed at the opening.

11. The air fryer with a transparent window according to claim 9, wherein the light-transmitting member (15) is light-transmitting glass.

12. The air fryer with a transparent window according to claim 10, wherein the opening is arranged inside an inner recess outside the air duct plate (18), and a size of the inner recess matches that of the light-transmitting member (15).

13. The air fryer with a transparent window according to claim 10, wherein the illumination light (16) is installed on the upper machine core (17).

14. The air fryer with a transparent window according to claim 9, wherein a top and a bottom of the body are provided with cold air inlets, and sides of the body are provided with cold air outlets, wherein the cold air inlets and the cold air outlets are all communicated with the heat dissipation channel (14),
preferably, a cooling fan (19) communicating with the heat dissipation channel (14) is installed on an upper side of the cooking chamber (1).

## Patentansprüche

1. Heißluftfritteuse mit einem transparenten Fenster, die ein Gehäuse aufweist, wobei eine Seite des Gehäuses mit einer Öffnung versehen ist, die mit einem Garraum (1) im Inneren der Heißluftfritteuse in Verbindung steht, und wobei ein schubladenartiger Frittierkorb in die Öffnung eingesetzt ist, wobei der schubladenartige Frittierkorb einen Frittierkorb (10) und einen Türverkleidungsabschnitt aufweist, der mit einer Seite des Frittierkorbs (10) verbunden ist, und der Türverkleidungsabschnitt eingerichtet ist, um die Öffnung zu verschließen, wobei der Türverkleidungsabschnitt und eine Seitenwand des Frittierkorbs (10) entsprechend mit einem hohlen Abschnitt versehen sind, und der hohle Abschnitt des Türverkleidungsabschnitts mit einem Fensterelement (3) versehen ist, und eine hintere Fensterabdeckung (2) zwischen einer Innenseite des Türverkleidungsabschnitts und dem Frittierkorb (10) angebracht ist, wobei die hintere Fensterabdeckung (2) eine Hohlstruktur aufweist, die dem Hohlabschnitt des Türverkleidungsabschnitts und des Frittierkorbs (10) entspricht, und eine Seite der hinteren Fensterabdeckung (2) am Frittierkorb (10) anliegt und die andere Seite am Fensterelement (3) anliegt, um das Fensterelement (3) auf den Türverkleidungsabschnitt zu drücken und zu fixieren;
**dadurch gekennzeichnet, dass**
eine Kante des hohlen Abschnitts des Frittierkorbs (10) mit einem Flanschabschnitt (11) versehen ist und eine dem Frittierkorb (10) zugewandte Seite der hinteren Fensterabdeckung (2) mit einer konkaven Stufe (21) versehen ist.

2. Heißluftfritteuse mit einem transparenten Fenster nach Anspruch 1, wobei der Türverkleidungsabschnitt eine vordere Türverkleidung (6) und eine hintere Türverkleidung (4) aufweist, wobei die Hohlabschnitte der vorderen Türverkleidung (6) und hinteren Türverkleidung (4) jeweils mit einer vorderen Fensterabdeckung (5) aus einem lichtdurchlässigen Material und dem Fensterelement (3) ausgestattet sind.

3. Heißluftfritteuse mit einem transparenten Fenster nach Anspruch 1, wobei eine dem Fensterelement (3) zugewandte Seite der hinteren Fensterabdeckung (2) mit einem Halterippenring (22) versehen ist, der am Fensterelement (3) befestigt ist.

4. Heißluftfritteuse mit einem transparenten Fenster nach Anspruch 3, wobei mehrere Pufferpolster (8) zwischen dem Fensterelement (3) und der hinteren Fensterabdeckung (2) an einem Umfang der Halterippe (22) angeordnet sind, wobei vorzugsweise jedes der Pufferpolster (8) eine am Fensterelement (3) befestigte Pufferplatte (81) und eine Befestigungssäule (82) aufweist, die an einer Seite der Pufferplatte (81) angeordnet ist, wobei mehrere Schlitze (84) an einer Umfangsseitenwand der Befestigungssäule (82) angeordnet sind und eine Positionierungsöffnung (83) an einem Endabschnitt der Befestigungssäule (82) angeordnet ist, wobei eine Buchse (23) zum Einführen der Befestigungssäule (82) an einer Seitenwand der hinteren Fensterabdeckung (2) an einer den Pufferpolstern (8) entsprechenden Position vorgesehen ist, eine Innenwand der Buchse (23) mit konvexen Rippen (24) versehen ist, die in entsprechende Schlitze (84) eingelassen sind, und ein Boden der Buchse (23) mit einer Positionierungssäule (25) versehen ist, die in die PositionierungsÖffnung (83) eingesetzt ist.

5. Heißluftfritteuse mit einem transparenten Fenster nach Anspruch 2, wobei die hintere Türverkleidung (4) mit einer dem Fensterelement (3) entsprechenden Positionierungsnut (42) versehen ist, wobei eine Kante des Fensterelements (3) zumindest teilweise in der Positionierungsnut (42) angeordnet ist.

6. Heißluftfritteuse mit einem transparenten Fenster nach Anspruch 2, wobei der Frittierkorb (10) durch mehrere Befestigungselemente (9) mit der hinteren Türverkleidung (4) verbunden ist, wobei die Befestigungselemente (9) außerhalb des hohlen Abschnitts verteilt sind.

7. Heißluftfritteuse mit einem transparenten Fenster nach Anspruch 2, wobei eine Innenwand des Frittierkorbs (10) mit einer Frittierplatten-Auflagestufe (7) versehen ist und der Hohlraum des Frittierkorbs (10) auf einer Oberseite der Frittierplatten-Auflagestufe (7) angeordnet ist.

8. Heißluftfritteuse mit einem transparenten Fenster nach Anspruch 2, wobei eine dem Frittierkorb (10) zugewandte Seitenwand der hinteren Türverkleidung (4) mit einer Frittierkorb-Positionierungsnut (43) versehen ist und sich eine nach außen erstreckende Kante eines oberen Endes des Frittierkorbs (10) in die Frittierkorb-Positionierungsnut (43) erstreckt.

9. Heißluftfritteuse mit einem transparenten Fenster nach einem der Ansprüche 1 bis 8, wobei zwischen einer Außenseite der Garkammer (1) und dem Gehäuse der Heißluftfritteuse ein Wärmeableitungskanal (14) ausgebildet ist und der Wärmeableitungskanal (14) darin mit einem Beleuchtungslicht (16) versehen ist, wobei eine dem Beleuchtungslicht (16) entsprechende Position an der Garkammer (1) mit einem lichtdurchlässigen Element (15) versehen ist und Licht, das durch das Beleuchtungslicht (16) emittiert wird, durch das lichtdurchlässige Element (15) in die Garkammer (1) einstrahlt.

10. Heißluftfritteuse mit einem transparenten Fenster nach Anspruch 9, wobei der Garraum (1) durch einen unteren Gerätekern (12) und eine Luftleitplatte (18) an der Oberseite des unteren Gerätekerns (12) gebildet wird, der Wärmeableitungskanal (14) zwischen der Luftleitplatte (18) und einem oberen Gerätekern (17) an dessen Oberseite ausgebildet ist und das Beleuchtungslicht (16) im Wärmeableitungskanal (14) angeordnet ist, wobei die Luftleitplatte (18) vorzugsweise an einer dem Beleuchtungslicht (16) entsprechenden Position eine Öffnung aufweist und das lichtdurchlässige Element (15) an der Öffnung angebracht ist.

11. Heißluftfritteuse mit einem transparenten Fenster nach Anspruch 9, wobei das lichtdurchlässige Element (15) lichtdurchlässiges Glas ist.

12. Heißluftfritteuse mit einem transparenten Fenster nach Anspruch 10, wobei die Öffnung innerhalb einer inneren Aussparung außerhalb der Luftleitplatte (18) angeordnet ist und eine Größe der inneren Aussparung mit der des lichtdurchlässigen Elements (15) übereinstimmt.

13. Heißluftfritteuse mit einem transparenten Fenster nach Anspruch 10, wobei das Beleuchtungslicht (16) am oberen Gerätekern (17) angebracht ist.

14. Heißluftfritteuse mit transparentem Fenster nach Anspruch 9, wobei eine Oberseite und eine Unterseite des Gehäuses mit Kaltlufteinlässen und Seiten des Gehäuses mit Kaltluftauslässen versehen sind, wobei die Kaltlufteinlässe und Kaltluftauslässe alle mit dem Wärmeableitungskanal (14) in Verbindung stehen, wobei vorzugsweise ein mit dem Wärmeableitungskanal (14) in Verbindung stehender Lüfter (19) an einer Oberseite der Garkammer (1) angebracht ist.

## Revendications

1. Friteuse à air avec une fenêtre transparente, comprenant un corps, dans laquelle un côté du corps est pourvu d'une ouverture communiquant avec une chambre de cuisson (1) à l'intérieur de la friteuse à air, et un panier à friture de type tiroir est inséré dans l'ouverture, le panier à friture de type tiroir comprend un panier à friture (10) et une partie de panneau de porte reliée à un côté du panier à friture (10), et la partie de panneau de porte est configurée pour bloquer l'ouverture, dans laquelle la partie de panneau de porte et une paroi latérale du panier à friture (10) sont pourvues de manière correspondante d'une partie creuse, et la partie creuse de la partie de panneau de porte est pourvue d'un élément de fenêtre (3), et un couvercle arrière de fenêtre (2) est installé entre un côté intérieur de la partie de panneau de porte et le panier à friture (10), dans lequel le couvercle arrière de fenêtre (2) a une structure creuse correspondant à la partie creuse de la partie de panneau de porte et du panier à friture (10), et un côté du couvercle arrière de fenêtre (2) vient en butée contre le panier à friture (10), et l'autre côté vient en butée contre l'élément de fenêtre (3) pour presser et fixer l'élément de fenêtre (3) sur la partie de panneau de porte ;
**caractérisée en ce que**,
un bord de la partie creuse du panier à friture (10) est pourvu d'une partie de bride (11), et un côté du couvercle arrière de fenêtre (2) faisant face au panier à friture (10) est pourvu d'un gradin concave (21).

2. Friteuse à air avec une fenêtre transparente selon la revendication 1, dans laquelle la partie de panneau de porte comprend un panneau de porte avant (6) et un panneau de porte arrière (4), les parties creuses du panneau de porte avant (6) et du panneau de porte arrière (4) sont respectivement équipées d'un couvercle avant de fenêtre (5) fait d'un matériau transmettant la lumière et de l'élément de fenêtre (3).

3. Friteuse à air avec une fenêtre transparente selon la revendication 1, dans laquelle un côté du couvercle arrière de fenêtre (2) faisant face à l'élément de fenêtre (3) est pourvu d'un anneau de nervure de retenue (22) fixé à l'élément de fenêtre (3).

4. Friteuse à air avec une fenêtre transparente selon la revendication 3, dans laquelle plusieurs patins amortisseurs (8) sont disposés entre l'élément de fenêtre (3) et le couvercle arrière de fenêtre (2) sur une périphérie de la nervure de retenue (22),
de préférence, chacun des patins amortisseurs (8) comprend une feuille tampon (81) fixée à l'élément de fenêtre (3) et une colonne de montage (82) disposée sur un côté de la feuille tampon (81), dans laquelle plusieurs fentes (84) sont disposées sur une paroi latérale circonférentielle de la colonne de montage (82), et un trou de positionnement (83) est disposé sur une partie terminale de la colonne de montage (82), dans laquelle un logement (23) pour l'insertion de la colonne de montage (82) est prévu sur une paroi latérale du couvercle arrière de la fenêtre (2) à une position correspondant aux patins amortisseurs (8), une paroi intérieure du logement (23) est pourvue de nervures convexes (24) encastrées dans les fentes correspondantes (84), et un fond du logement (23) est pourvu d'une colonne de positionnement (25) insérée dans le trou de positionnement (83).

5. Friteuse à air avec une fenêtre transparente selon la revendication 2, dans laquelle le panneau de porte arrière (4) est pourvu d'une rainure de positionnement (42) correspondant à l'élément de fenêtre (3), dans laquelle un bord de l'élément de fenêtre (3) est au moins partiellement situé dans la rainure de positionnement (42).

6. Friteuse à air avec une fenêtre transparente selon la revendication 2, dans laquelle le panier à friture (10) est relié au panneau de porte arrière (4) par plusieurs éléments de fixation (9), les éléments de fixation (9) étant répartis à l'extérieur de la partie creuse.

7. Friteuse à air avec une fenêtre transparente selon la revendication 2, dans laquelle une paroi intérieure du panier à friture (10) est pourvue d'un gradin de support de panneau de friture (7), et la partie creuse du panier à friture (10) est située sur un côté supérieur du gradin de support de panneau de friture (7).

8. Friteuse à air avec une fenêtre transparente selon la revendication 2, dans laquelle une paroi latérale du panneau de porte arrière (4) faisant face au panier à friture (10) est pourvue d'une rainure de positionnement du panier à friture (43), et un bord s'étendant vers l'extérieur d'une extrémité supérieure du panier à friture (10) s'étend dans la rainure de positionnement du panier à friture (43).

9. Friteuse à air avec une fenêtre transparente selon l'une quelconque des revendications 1-8, dans laquelle un canal de dissipation de la chaleur (14) est formé entre un extérieur de la chambre de cuisson (1) et le corps de la friteuse à air, et le canal de dissipation de la chaleur (14) est pourvu d'une lampe d'éclairage (16), dans laquelle une position correspondant à la lampe d'éclairage (16) sur la chambre de cuisson (1) est pourvue d'un élément de transmission de lumière (15), et la lumière émise par la lampe d'éclairage (16) est irradiée dans la chambre de cuisson (1) à travers l'élément de transmission de lumière (15).

10. Friteuse à air avec une fenêtre transparente selon la revendication 9, dans laquelle la chambre de cuisson (1) est formée par un noyau de machine inférieur (12) et une plaque de conduit d'air (18) sur un côté supérieur du noyau de machine inférieur (12), le canal de dissipation de la chaleur (14) est formé entre la plaque de conduit d'air (18) et un noyau de machine supérieur (17) sur son côté supérieur, et la lampe d'éclairage (16) est située dans le canal de dissipation de la chaleur (14),
de préférence, la plaque de conduit d'air (18) présente une ouverture à une position correspondant à la lampe d'éclairage (16), et l'élément de transmission de lumière (15) est installé dans l'ouverture.

11. Friteuse à air avec une fenêtre transparente selon la revendication 9, dans laquelle l'élément de transmission de lumière (15) est un verre transmettant la lumière.

12. Friteuse à air avec une fenêtre transparente selon la revendication 10, dans laquelle l'ouverture est disposée à l'intérieur d'un renfoncement interne à l'extérieur de la plaque de conduit d'air (18), et une taille du renfoncement interne correspond à celle de l'élément de transmission de lumière (15).

13. Friteuse à air avec une fenêtre transparente selon la revendication 10, dans laquelle la lampe d'éclairage (16) est installée sur le noyau de machine supérieur (17).

14. Friteuse à air avec une fenêtre transparente selon la revendication 9, dans laquelle le haut et le bas du corps sont pourvus d'entrées d'air froid, et les côtés du corps sont pourvus de sorties d'air froid, dans laquelle les entrées d'air froid et les sorties d'air froid communiquent toutes avec le canal de dissipation de la chaleur (14),
de préférence, un ventilateur de refroidissement (19) communiquant avec le canal de dissipation de la chaleur (14) est installé sur un côté supérieur de la chambre de cuisson (1).
